# EUROPEAN PATENT APPLICATION

(11) **EP 2 345 931 A1**
(43) Date of publication of application: **20.07.2011**
(21) Application number: 10250684.7
(22) Date of filing: 31.03.2010
(51) Int. Cl.: G03B 17/02, G03B 21/28, H04N 5/74

(54) **Photographic and projection device**

(30) Priority: 18.01.2010 TW 099101283
(71) Applicant: Ability Enterprise Co., Ltd., Tapei (TW)
(72) Inventor: Lu, Tsung-Yi, Lu Chu Tao-Yuan (TW)
(74) Representative: Carter, Stephen John

(57) **Abstract**

A photographic and projection device is disclosed. The photographic and projection device includes an image sensor device, a lens assembly, a movable reflective mirror, and a display panel. The movable mirror has a reflective surface, and the movable mirror is disposed between the lens assembly and the image sensor device. The display panel is located towards the reflective surface of the movable reflective mirror. When the movable mirror is located in a first position, an external image can be formed on the image sensor device by the lens assembly, and when the movable mirror is located in the second position, the image of the display panel can be projected to the outside by the movable mirror and the lens assembly.

## Description

### BACKGROUND OF THE INVENTION

### 1. FIELD OF THE INVENTION

The present invention generally relates to a photographic device, and more particularly to a photographic and projection device.

### 2. DESCRIPTION OF THE PRIOR ART

As portable electronic products, such as multi-media mobile phones, mobile TV, digital cameras, digital video cameras, electronic game players, or mobile multi-media players, have become much more popular in the common consumer. The consumer has used to watch multi-media data on the portable electronic products. However, the screen size of the portable electronic product is too small to watch multi-media data for a long time. And the conventional projector has many deficiencies. The volume of the conventional projector is too large to be portable. Besides, the light source of the conventional projector generates large heat. Moreover, the cooling fan of the conventional projector also generates large noise.

For the reason that there are some disadvantages of the prior art mentioned above, there is a need existed to propose a photographic and projection device so as to meet consumer needs.

### SUMMARY OF THE INVENTION

Accordingly, the present invention has been made in order to meet such a need described above, and it is an object of the present invention to provide a photographic and projection device so as to meet consumer needs.

In order to achieve the above object, the present invention provides a photographic and projection device. The photographic and projection device includes an image sensor device, a lens assembly, a movable reflective mirror, and a display panel. The movable mirror has a reflective surface, and the movable mirror is disposed between the lens assembly and the image sensor device. The display panel is located towards the reflective surface of the movable reflective mirror. When the movable mirror is located in a first position, an external image can be formed on the image sensor device by the lens assembly, and when the movable mirror is located in the second position, the image of the display panel can be projected to the outside by the movable mirror and the lens assembly.

### BRIEF DESCRIPTION OF THE DRAWINGS

Fig. 1 shows the perspective view of a photographic and projection device in accordance with an embodiment of the present invention; and
Fig. 2A and Fig. 2B show the different operation methods of the photographic and projection device respectively.

### DETAILED DESCRIPTION OF THE INVENTION

The detailed description of the present invention will be discussed in the following embodiments, which are not intended to limit the scope of the present invention, but can be adapted for other applications. While drawings are illustrated in details, it is appreciated that the quantity of the disclosed components may be greater or less than that disclosed, except expressly restricting the amount of the components.

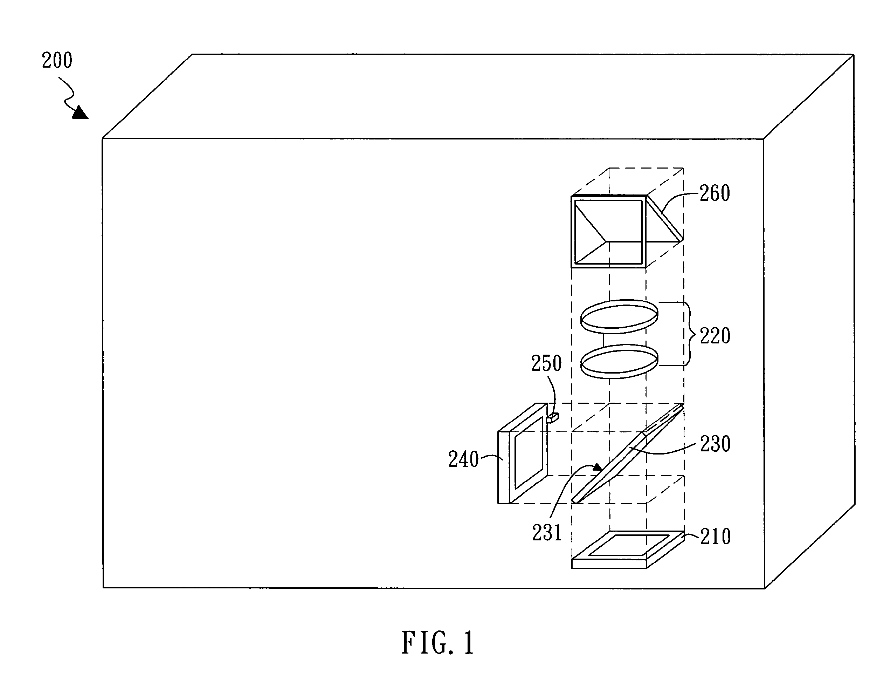

Fig. 1 shows the perspective view of a photographic and projection device 200 in accordance with an embodiment of the present invention. The photographic and projection device 200 includes an image sensor device 210, a lens assembly 220, a movable reflective mirror 230, and a display panel 240.

The lens assembly 220 is disposed over the image sensor device 210, and the lens assembly 220 includes at least one lens for optic operations, such as focusing, zoon-in, zoom-out, and so on. The movable mirror 230 has a reflective surface 231, and the movable mirror 230 is disposed between the lens assembly 220 and the image sensor device210. The display panel 240 is located towards the reflective surface 231 of the movable reflective mirror 230.

The reflective surface 231 of the movable reflective mirror 230 is capable of changing the path of light, and the movable reflective mirror 230 is capable of changing position among a plurality of positions. For example, the movable reflective mirror 230 is capable of changing position between a first position and a second position so as to change the path of light. For example, when the movable mirror 230 is located in the first position, an external image can be formed on the image sensor device 210 by the lens assembly 220, and when the movable mirror 230 is located in the second position, the image of the display panel 240 can be projected to the outside by the movable mirror 230 and the lens assembly 220.

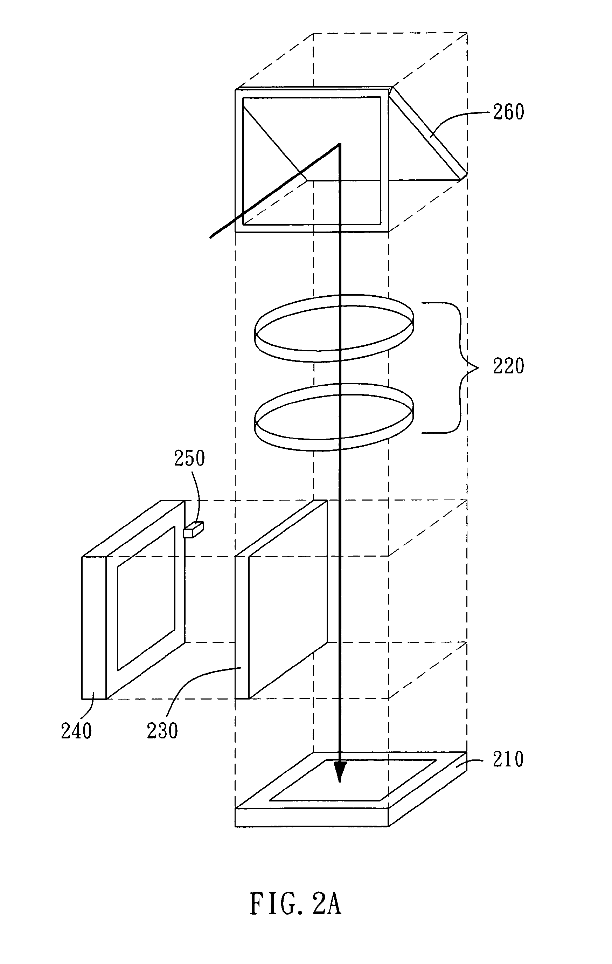

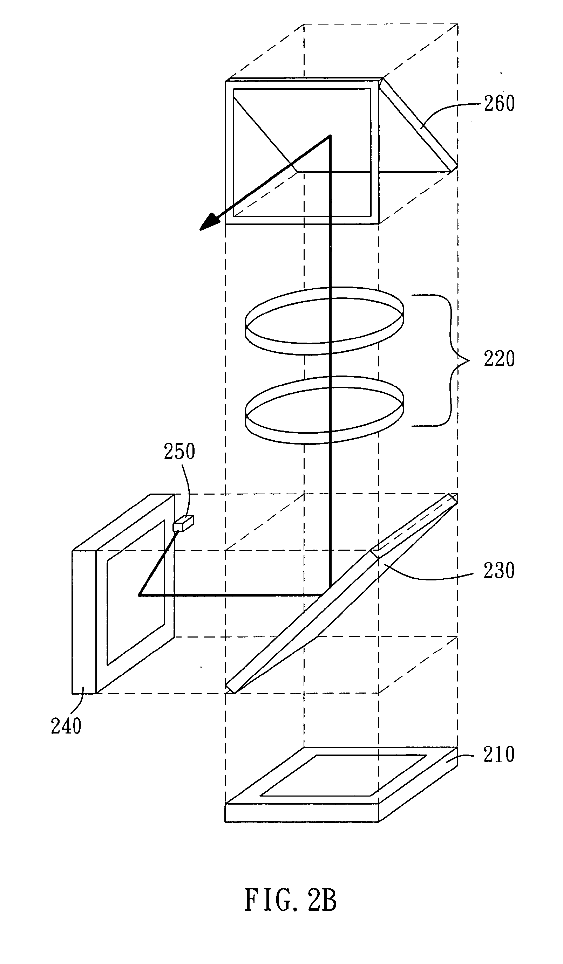

Fig. 2A and Fig. 2B show the different operation methods of the photographic and projection device 200 respectively. Referring to Fig. 2A, the movable mirror 230 is located in the first position, and the movable mirror 230 will not interfere with the external light which is projected to the image sensor device 210. Therefore, the external image can be formed on the image sensor device 210 by the lens assembly 220 for capturing images.

Moreover, referring to Fig. 2B, the movable mirror 230 is located in the second position, the external light can not be projected to the image sensor device 210, and the image of the display panel 240 can be projected to the outside by the movable mirror 230 and the lens assembly 220.

In this embodiment, the movable mirror 230 changes position between the first position and the second position by rotation, but not limited to this. The movable mirror 230 can also change position between the first position and the second position by movement. Moreover, in this embodiment, the image sensor device 210 is a CCD image sensor, but not limited to this. The image sensor device 210 can be other kinds of image sensor.

In this embodiment, the display panel 240 is a LCD panel, wherein the LCD panel is preferred to be a reflection-type LCD panel. The reflection-type LCD panel has at least one light source 250, wherein the light source 250 is preferred to be a LED light source for reducing volume of the light source 250 and decreasing the heat generated by the light source 250. Although specific details of the display panel 240 have been illustrated and described in the embodiment mentioned above, the design of the display panel 240 is not limited. Based on different needs, the display panel 240 can be other kinds of image display device or other design.

According to this embodiment, the photographic and projection device 200 can further include a fixed reflective mirror 260. The fixed reflective mirror 260 is disposed between the lens assembly 220 and the outside. The optic operations, such as focusing, zoon-in, and zoom-out, can be performed within the photographic and projection device 200 so as to prevent affecting the industry design of the photographic and projection device 200. Hence, the photographic and projection device 200 is a compact digital camera with folding optics, but not limited to this. Based on different needs, the photographic and projection device 200 can be other industry design or other structure design. For example, the photographic and projection device 200 can be a SLR-type digital camera, or the photographic and projection device 200 can be integrated into a photographic and projection module. The photographic and projection module can be applied in a SLR-type digital camera, a compact digital camera with folding optics, mobile phone, PDA, notebook computer, and so on.

The photographic and projection device 200 of the present invention can totally meet all consumer needs. For example, there is no need for the consumer to carry a photographic device and a projection device respectively. By the photographic and projection device 200 of the present invention, the consumer can watch large-size images much more comfortably, rather than small-size images. Besides, the conventional projector has many deficiencies. The conventional projector has large volume, such that the conventional projector is not suitable to carry. The conventional projector generates large heat and large noise. The photographic and projection device 200 of the present invention does not have deficiencies of the conventional projector mentioned above. Moreover, by using the same lens assembly during capturing images or projecting images, the design of the photographic and projection device is simplified, and the volume of the photographic and projection device is decreased. The light source 250 of the display panel 240 is far from the image sensor device 210. Therefore, the life-time of the image sensor device 210 will not be affected by the heat generated by the light source 250.

Although specific embodiments have been illustrated and described, it will be appreciated by those skilled in the art that various modifications may be made without departing from the scope of the present invention, which is intended to be limited solely by the appended claims.

## Claims

1. A photographic and projection device, comprising:
an image sensor device;
a lens assembly, said lens assembly comprising at least one lens;
a movable reflective mirror, said movable mirror having a reflective surface, said movable mirror disposed between said lens assembly and said image sensor device, wherein said movable mirror is capable of changing position between a first position and a second position; and
a display panel, said display panel located towards said reflective surface of said movable reflective mirror, wherein when said movable mirror is located in said first position, an external image can be formed on said image sensor device by said lens assembly, and when said movable mirror is located in said second position, the image of said display panel can be projected to the outside by said movable mirror and said lens assembly.

2. The photographic and projection device according to claim 1, wherein said movable mirror changes position between said first position and said second position by rotation.

3. The photographic and projection device according to claim 1, wherein said movable mirror changes position between said first position and said second position by movement.

4. The photographic and projection device according to claim 1, wherein said image sensor device comprises a CCD image sensor.

5. The photographic and projection device according to claim 1, wherein said photographic and projection device is a compact digital camera with folding optics.

6. A photographic and projection module, comprising:
an image sensor device;
a lens assembly, said lens assembly comprising at least one lens;
a movable reflective mirror, said movable mirror having a reflective surface, said movable mirror disposed between said lens assembly and said image sensor device, wherein said movable mirror is capable of changing position between a first position and a second position; and
a display panel, said display panel located towards said reflective surface of said movable reflective mirror, wherein when said movable mirror is located in said first position, an external image can be formed on said image sensor device by said lens assembly, and when said movable mirror is located in said second position, the image of said display panel can be projected to the outside by said movable mirror and said lens assembly.

7. The photographic and projection module according to claim 6, wherein said movable mirror changes position between said first position and said second position by rotation.

8. The photographic and projection module according to claim 6, wherein said movable mirror changes position between said first position and said second position by movement.

9. The photographic and projection module according to claim 6, wherein said image sensor device comprises a CCD image sensor.

10. The photographic and projection device according to claim 1 or the photographic and projection module according to claim 6, wherein said display panel is a LCD panel.

11. The photographic and projection module according to claim 10, wherein said LCD panel is a reflection-type LCD panel.

12. The photographic and projection module according to claim 11, wherein said reflection-type LCD panel has at least one light source.

13. The photographic and projection module according to claim 12, wherein said light source is a LED light source.

14. The photographic and projection module according to claim 6, wherein said photographic and projection device is applied in a compact digital camera with folding optics.
